# EUROPÄISCHE PATENTSCHRIFT

(11) **EP 0 905 341 B1**
(45) Veröffentlichungstag und Bekanntmachung des Hinweises auf die Patenterteilung: **27.03.2002**
(21) Anmeldenummer: 98116507.9
(22) Anmeldetag: 01.09.1998
(51) Int. Cl.: E05D 5/08

(54) **Möbelbeschlagteil zur werkzeuglosen Montage in einer Ausnehmung in einem Möbelteil, insbesondere Türflügel-Anschlagteil für Möbelscharniere**
Furniture fitting for tool-less mounting in an opening of a furniture piece, especially door wing fixing part of furniture hinges
Ferrure de meuble pour fixation sans outil dans un orifice d'un élément de meuble, en particulier élément de fixation de charnières de meuble pour porte de meuble

(30) Priorität: 30.09.1997 DE 29717508 U
(43) Veröffentlichungstag der Anmeldung: 31.03.1999
(73) Patentinhaber: MEPLA-WERKE LAUTENSCHLÄGER GmbH & Co. KG, D-64354 Reinheim (DE)
(72) Erfinder: Lautenschläger, Horst, 64354 Reinheim (DE)
(74) Vertreter: Helber, Friedrich G., Dipl.-Ing.

(56) Entgegenhaltungen:
- DE-A- 19 521 909
- DE-U- 29 511 216

## Beschreibung

Die Erfindung betrifft ein Möbelbeschlagteil für die werkzeuglose Montage in einer Ausnehmung in einem plattenförmigen Möbelteil, mit einem gegenüber der Ausnehmung mit Untermaß bemessenen, in die Ausnehmung einsetzbaren Halteteil, an dessen oberem freien Rand ein radial vorstehender, in Anlage an die Außenseite des Möbelteils führbarer Flansch vorgesehen ist, und mit einem in montiertem Zustand innerhalb der Ausnehmung liegenden Klemmelement, welches durch eine auf dem Befestigungsflansch angeordnete, von Hand betätigbare Handhabe im wesentlichen radial in klemmende Anlage an die Wandung der Ausnehmung aufspreizbar ist.

Möbelbeschlagteile, bei denen wenigstens ein als Befestigungszapfen ausgebildeter Halteteil in einer Ausnehmung oder Bohrung in einem plattenförmigen Möbelteil eingesetzt und mittels einer verschwenkbar angeordneten Handhabe ohne Werkzeug in der Ausnehmung in Klemmanlage bzw. aus der Klemmanlage bringbar sind, sind bekannt (DE- 195 27 600 C2).

Auch als Einstecktopf ausgebildete, versenkt in eine Ausnehmung in der Rückseite eines Türflügels zu montierende Türflügel-Anschlagteile von Möbelscharnieren dieser Art sind bekannt (DE- 195 21 909 A1), bei denen an den beiden seitlichen Abflachungen des Trogteils je ein Klemmelement radial nach außen verschwenkbar angeordnet ist, welche jeweils einen auf dem Befestigungsflansch nach außen weisend angeordneten angesetzten Hebelarm aufweisen, an deren äußeren freien Enden jeweils eine verschwenkbar auf dem Befestigungsflansch gelagerte Handhabe angreift, welche - abhängig von ihrer Schwenkstellung - über die Hebelarme die Klemmelemente zwischen der ausgeschwenkten Befestigungsstellung und der zurückgeschwenkten Freigabestellung des Anschlagteils in der Türflügel-Ausnehmung verstellen. Die beiden Klemmelemente sind durch eine sicherungsringartige flache Biegefeder in die Freigabestellung vorgespannt. Diese Biegefeder ist an ihren äußeren, der Wandung der Ausnehmung zugewandten seitlichen Randbereichen mit zugespitzten Vorsprüngen versehen, die beim Aufschwenken der Klemmelemente in die Wandung der Ausnehmung eindringen und so eine zusätzliche formschlüssige Verriegelung des Türflügel-Anschlagteils gegen Austritt aus der Ausnehmung gewährleisten. Dieser Türflügel-Anschlagteil hat sich in der Praxis außerordentlich bewährt. Infolge des relativ komplexen Aufbaus ist der Herstellungsaufwand und sind somit auch die Herstellungskosten jedoch erheblich.

Der Erfindung liegt demgegenüber die Aufgabe zugrunde, einen Möbelbeschlagteil, insbesondere einen Türflügel-Anschlagteil der hier in Frage stehenden Art zu schaffen, welcher durch einen vereinfachten Aufbau eine preisgünstigere Herstellung ermöglicht, ohne daß hierbei die einfache und schnelle, werkzeuglose Montage und Demontage oder die sichere Verankerung in montiertem Zustand beeeinträchtigt wird.

Ausgehend von einem Möbelbeschlagteil der eingangs erwähnten Art wird diese Aufgabe erfindungsgemäß dadurch gelöst, daß das Klemmelement als sich über einen Teil der Höhe und einen Teil des Umfangs des Halteteils erstreckender und im Erstreckungsbereich im wesentlichen an die Kontur der Ausnehmung angepaßter Bügelkörper mit beidseitig angesetzten, auf der Außenseite des Halteteils liegenden Hebelansätzen ausgebildet ist, welche um eine gemeinsame Achse verschwenkbar am Flansch oder in Flanschnähe am Halteteil angelenkt sind, daß die Handhabe auf der Oberseite des Flanschs um eine parallel zur Schwenkachse des Bügelkörpers verlaufende Schwenkachse zwischen einer vom Flansch hochgeschwenkten und einer auf dem Flansch aufliegenden Stellung verschwenkbar angelenkt ist, und daß die Handhabe im Bereich ihrer verschwenkbaren Lagerung am Flansch jeweils einen unter den Flansch vortretenden Nockenansatz aufweist, die an jeweils einer an den Bügelkörper-Hebelansätzen vorgesehenen Nocken-Gegenfläche angreifen.

In einer vorteilhaften, als Türflügel-Anschlagteil für Scharniere bestimmten Weiterbildung kann der Möbelbeschlagteil so ausgebildet sein, daß der Halteteil in an sich bekannter Weise als beidseitig seitlich abgeflachter trogartiger Topfteil mit an dessen oberem Rand angesetztem und in der bestimmungsgemäßen Montagelage auf der Rückseite des jeweiligen Türflügels aufliegendem und die Türflügel-Ausnehmung zumindest teilweise abdeckenden, einstückig angesetzten Befestigungsflansch ausgebildet ist, wobei der metallische Bügelkörper im Bereich der in der bestimmungsgemäßen Montagestellung innerhalb der Türflügel-Ausnehmung der benachbarten Türflügel-Randkante gegenüberliegenden Wandungsbereich des Topfteils vorgesehen ist und die um eine gemeinsame Achse verschwenkbar am Befestigungsflansch oder am Topfteil angelenkten flachen Hebelansätze über die Außenseite der seitlichen Abflachungen des Trogteils geführt sind.

Der Bügelkörper kann dabei zumindest in seinem, der Kontur der Wandung der Ausnehmung angepaßten Teil in einem Ausschnitt in der Wandung des Topfteils angeordnet sein.

Alternativ kann dieser Teil des Bügelkörpers aber auch auf der Außenseite der Wandung des Topfteils angeordnet sein.

Der Bügelkörper weist dabei zweckmäßig in seinem in Klemmanlage an die Wandung der Türflügel-Ausnehmung bringbaren Bereich einen bogenförmigen Abschnitt auf, dessen Außenradius der zur Aufnahme des Topfteils bestimmten Türflügel-Ausnehmung entspricht.

Dabei empfiehlt es sich, den Bügelkörper auf seiner Außenseite mit zur Wandung einer zur Aufnahme des Topfteils bestimmten Türflügel-Ausnehmung vortretenden Haltezähnen oder Halterippen zu versehen, welche also in die Wandung eindringen und somit über eine rein klemmende, d.h. kraftschlüssige Halterung des Türflügel-Anschlagteils hinaus einen zusätzlichen Formschluß erzeugen.

Der Bügelkörper wird dabei vorzugsweise als Stanz-Preßteil aus Metallblech ausgebildet, wobei ein Material verwendet wird, welches dann - z.B. durch geeignete Wärmebehandlung- in seinem im Topfteil montierten Zustand federhart ausbildbar ist.

Auch der Topfteil und der Befestigungsflansch sind bevorzugt ein integraler Stanz-Preßteil aus Metallblech.

Die Hebelansätze am Bügelkörper weisen zweckmäßig jeweils einen, einen Schlitz im Befestigungsflansch durchsetzenden und eine Begrenzungskante des jeweiligen Schlitzes umgreifenden Hakenansatz auf. Die beiden Hakenansätze bewirken also die verschwenkbare Lagerung des Bügelkörpers am Befestigungsflansch.

Die Handhabe hat in bevorzugter Ausgestaltung der Erfindung die Form einer niedrigen U-förmigen Bügelplatte, welche im Bereich der freien Enden ihrer beiden U-Schenkel jeweils verschwenkbar auf dem Befestigungsflansch gelagert ist.

Dabei sind dann an den freien Enden der U-Schenkel Zapfenansätze vorgesehen, welche jeweils in eine im Befestigungsflansch ausgebildete Lageraufnahme eingreifen.

Die Handhabe wird dabei mit Vorteil als integraler Druckgußteil aus Metall ausgebildet, an den auch die durch jeweils ein Fenster im Befestigungsflansch durchgeführten Nockenansätze integral angegossen sind.

An der Außenseite des dem Bügelkörper gegenüberliegenden Wandungsbereich des Topfteils wird zweckmäßig wenigstens ein zugespitzter oder schneidenartig zugeschärfter Vorsprung, z.B. in Form einer in Umfangsrichtung verlaufenden Rippe, vorgesehen, der bzw. die sich als Reaktion der bei der Montage des Türflügel-Anschlagteils zwischen dem Bügelkörper und der Wandung der Ausnehmung auftretenden Klemmkräfte auf der dem Bügelkörper gegenüberliegenden Seite ebenfalls in die Wandung der Ausnehmung eingräbt. bzw. eingraben.

Um sicherzustellen, daß der Bügelkörper bei einer erforderlichen Demontage beim Hochschwenken der Handhabe auch tatsächlich aus seiner Klemmstellung in die Freigabestellung überführt wird, empfiehlt es sich außerdem, an der Handhabe und/oder dem Bügelkörper Rückstellelemente vorzusehen, welche den Bügelkörper bei einer Verschwenkung in die hochgeschwenkte Stellung zwangsläufig aus der klemmenden Anlage an der Wandung der Ausnehmung in eine aus der Klemmstellung zurückgezogene Freigabestellung zurückziehen.

Die Erfindung ist in der folgenden Beschreibung zweier Ausführungsbeispiele in Verbindung mit der Zeichnung näher erläutert, und zwar zeigt:
- Fig. 1: eine perspektivische Ansicht eines Möbelscharniers mit einem in der erfindungsgemäßen Weise ausgebildeten Türflügel-Anschlagteil;
- Fig. 2: eine Ansicht auf die Unterseite des aus Metallblech hergestellten Türflügel-Anschlagteils, gesehen in Richtung des Pfeils 2 in Fig. 1;
- Fig. 3: eine Schnittansicht entlang der in Figur 2 durch die Pfeile 3-3 veranschaulichten Schnittebene;
- Fig. 4: eine in der Schnittführung der Figur 3 entsprechende Schnittansicht durch den Türflügel-Anschlagteil, jedoch mit in die Freigabestellung hochgeschwenkter Handhabe;
- Fig. 5: eine der Figur 2 entsprechende Unteransicht des Einstecktopfs des Türflügel-Anschlagteils ohne montierten Bügelkörper und Handhabe;
- Fig. 6: eine Schnittansicht durch den in Figur 5 gezeigten Einstecktopf mit der durch die Pfeile 6-6 in Figur 5 veranschaulichten Schnittführung;
- Fig. 7: eine Ansicht auf die Unterseite der Handhabe des in den Figuren 2 bis 4 gezeigten Einstecktopfs;
- Fig. 8: eine Schnittansicht, gesehen in Richtung der Pfeiole 8-8 in Figur 7;
- Fig. 9: eine Draufsicht auf die Handhabe, gesehen in Richtung des Pfeils 9 in Figur 8;
- Fig. 10: eine teilweise geschnittene Ansicht der Handhabe, gesehen in Richtung der Pfeile 10-10 in Figur 9;
- Fig. 11: eine Unteransicht auf den als Klemmkörper des Türflügel-Anschlagteils vorgesehenen Bügelkörper;
- Fig. 12: eine Schnittansicht des Bügelkörpers, gesehen in Richtung der Pfeile 12-12 in Figur 11; und
- Fig. 13: eine der Figur 3 ähnliche Ansicht eines abgewandelten Türflügel-Anschlagteils in der Montagestellung mit herabgeschwenkter Handhabe; und
- Fig. 14: eine der Figur 13 entsprechende Ansicht des abgewandelten Türflügel-Anschlagteils, jedoch mit in die Freigabestellung vorgeschwenkter Handhabe.

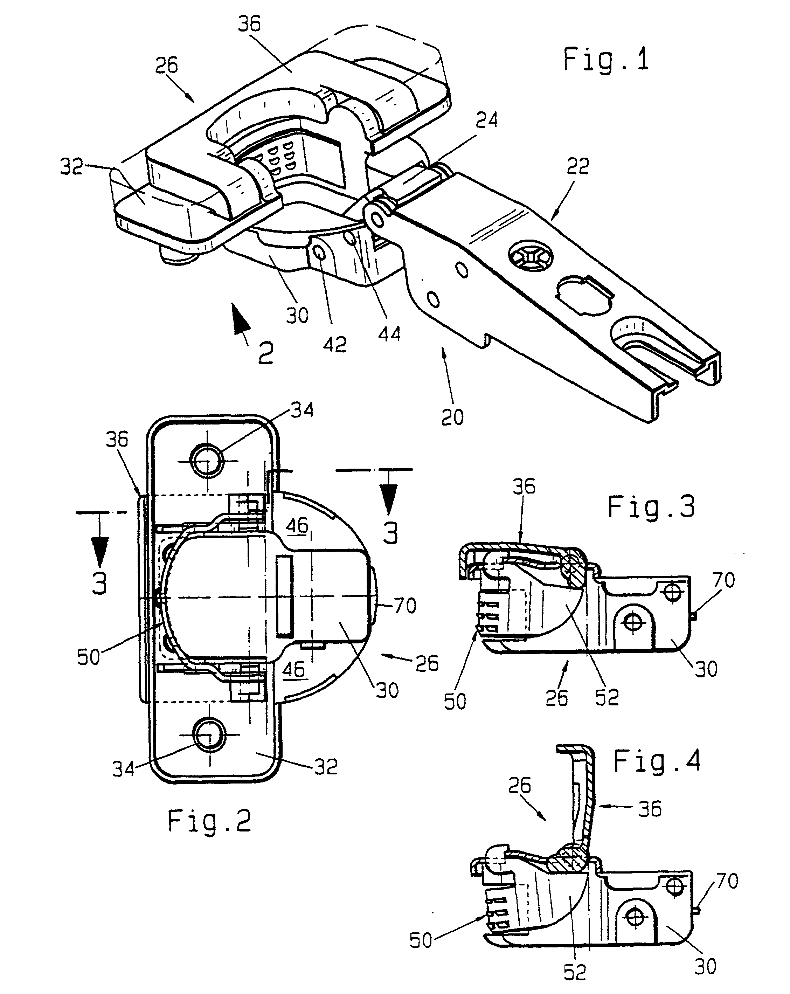

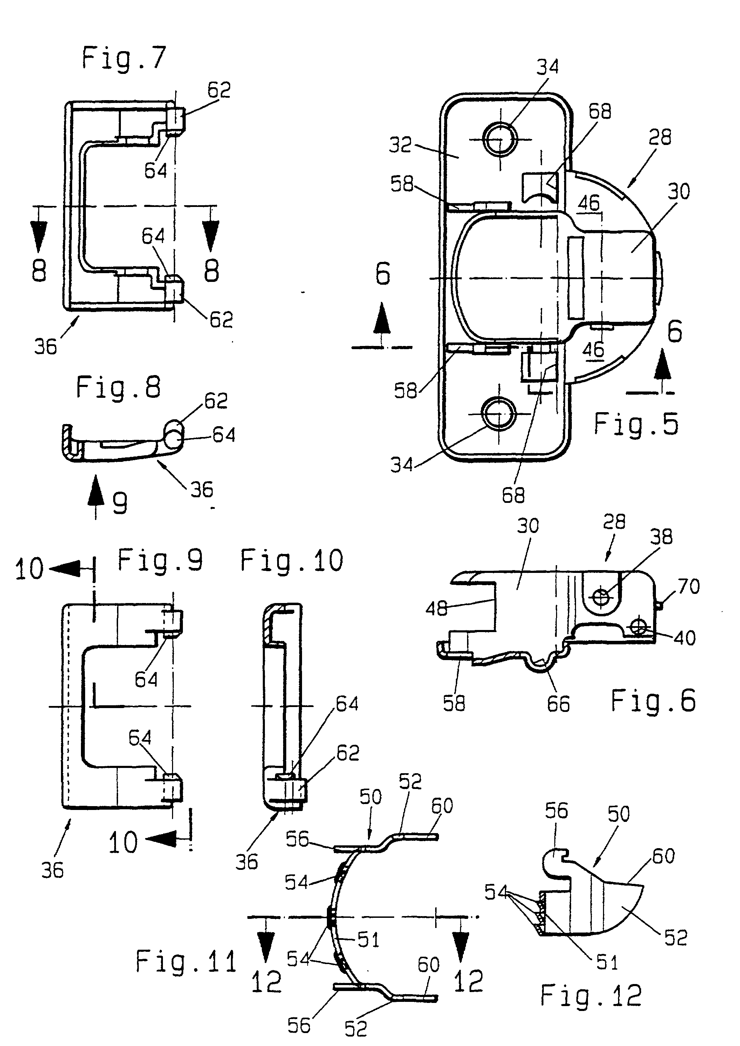

In Fig. 1 ist schematisch ein in seiner Gesamtheit mit 20 bezeichnetes Möbelscharnier dargestellt, bei welchem ein als langgestreckter Tragarm 22 ausgebildeter, an der Seitenwand eines Schranks einstellbar befestigbarer Korpus-Anschlagteil über einen von zwei Scharnierlenkern, von denen nur der eine Scharnierlenker 24 gezeigt ist, gebildeten Gelenkmechanismus mit einem in der erfindungsgemäßen Weise ausgebildeten, versenkt in einer Ausnehmung in der Rückseite eines - nicht gezeigten - Türflügels montierbarer Türflügel-Anschlagteil 26 gekoppelt ist. Der Türflügel-Anschlagteil 26 weist einen - im gezeigten Fall aus Metallblech im Stanz-Preßverfahren hergestellten - Scharnier- oder Einstecktopf 28 auf, der in der nachstehend in Verbindung mit den Figuren 5 und 6 beschriebenen Weise ausgestaltet sein kann, welcher durch das in Verbindung mit den Figuren 11 und 12 beschriebene Klemmelement am bzw. im Türflügel lösbar gehalten wird. Der den Gegenstand der Erfindung bildende Türflügel-Anschlagteil 26 ist in den Figuren 2 bis 4 gezeigt und weist einen Einstecktopf 28 auf, welcher sich aus dem eigentlichen versenkt in der - nicht gezeigten - Ausnehmung des Türflügels einsetzbaren Topfteil 30 und einem an dessen oberen Rand angeordneten, beidseitig seitlich vortretenden Befestigungsflansch 32 zusammensetzt, dessen türflügelzugewandte Unterseite beim montierten Einstecktopf 26 auf der Innenfläche des Türflügels aufsitzt. Von der Unterseite des Befestigungsflanschs 32 treten mit seitlichem Abstand zum eigentlichen Topfteil 30 versetzt vorgesehene, in zugeordnete Bohrung im Türflügel eingreifende Zentrierzapfen 34 vor, die im dargestellten Fall einstückig aus dem Material des Befestigungsflanschs herausgeprägt sind und - da sie nur der Drehausrichtung des Einstecktopfs 26 relativ zur benachbarten Randkante des Türflügels dienen, d.h. bei montiertem Einstecktopf keiner Beanspruchung ausgesetzt sind - eine relativ kurze Länge haben können. Auf der Oberseite des Befestigungsflanschs ist eine Handhabe 36 in Form einer niedrigen, in der Draufsicht U-förmigen Bügelplatte vorgesehen, die in den Figuren 7 bis 10 noch gesondert dargestellt ist.

Der eigentliche - versenkt in der (nicht gezeigten) Ausnehmung in der Rückseite eines Türflügels zu montierende Topfteil 30 des eigentlichen Einstecktopfs 28 hat die Form einer seitlich abgeflachten Wanne, in deren Seitenwänden Bohrungen 38 und 40 eingestanzt sind, in denen die Enden der die Scharnierlenker des Gelenkmechanismus einstecktopfseitig verschwenkbar lagernden Lagerstifte 42, 44 (Fig. 1) vernietet sind. Der Befestigungsflansch 32 greift seitlich über die in der Regel in der Draufsicht kreisförmig begrenzte Ausnehmung im Türflügel und deckt also den dort zwischen dem Topfteil 30 und der Wand der Aussparung bestehenden Zwischenraum ab. Im zur benachbarten Türflügel-Stirnkante weisenden - in Fig. 2 rechts liegenden - vorderen Bereich wird dieser Zwischenraum dagegen von vom oberen Rand des Topfteils abgekanteten und entsprechend dem Durchmesser der Ausnehmung kreisabschnittsförmig begrenzten Abschnitten 46 aus dem Blechmaterial des Scharniertopfs 28 verschlossen, so daß die Ausnehmung im Türflügel bei montiertem Türflügel-Anschlagteil vollkommen verdeckt ist.

In dem dem Tragarm 22 abgewandte Wandungsbereich des Topfteils, welcher in bestimmungsgemäßer Montagestellung in der Ausnehmung zu dem der Türflügel-Stirnkante gegenüberliegenden Bereich der Wandung der Ausnehmung weist, ist ein sich über einen größeren Teil der Höhe des Topfteils in Umfangsrichtung erstreckender Ausschnitt 48 im Topfteil vorgesehen, in welchem ein bogenförmiger Abschnitt 51 eines Bügelkörpers 50 angeordnet ist, der in seiner Form dem Wandungs-Ausschnitt 48 etwa entsprechend geformt ist und an beiden Seiten über die Außenseite der seitlichen Abflachung des Trogteils geführte flache Hebelansätze 52 aufweist. Der im Bereich der Aussparung liegende Abschnitt 51 des Bügelkörpers ist mit eingeprägten radial nach außen zur Wandung der Ausnehmung weisenden Haltezähne 54 versehen, welche bei der Montage des Türflügel-Anschlagteils 26 in die Wandung der Ausnehmung im Türflügel eindringen.

Von den seitlichen Hebelansätzen 52 des im Stanz-Preßverfahren aus federelastischem Metallblech hergestellten Bügelkörpers 50 erstrecken sich jeweils flache Hakenansätze 56 nach oben, welche zum Teil durch Schlitze 58 im Befestigungsflansch hindurchgeführt sind und eine Begrenzungskante des jeweiligen Schlitzes 58 umgreifen. Mit Abstand und unterhalb der Hakenansätze 56 ist die obere Begrenzungskante der Hebelansätze 52 als Nocken-Gegenfläche 60 für jeweils ein an der nachstehend in Verbindung mit den Figuren 7 bis 10 noch beschriebenen Handhabe 36 vorgesehenen Nockenansatz 62 ausgebildet. Ersichtlich ist bereits jetzt, daß der am besten in der in den Figuren 3 und 4 erkennbaren Weise bestimmungsgemäß im Ausschnitt 48 montierte Bügelkörper 50 durch die in den Schlitzen 58 eingehängten Hakenansätze verschwenkbar, d.h. aus dem Ausschnitt 48 herausdrängbar bzw. in ihn zurückziehbar gelagert ist. Der Verschwenkvorgang aus dem Ausschnitt 48 heraus in Anlage an die Wandung einer Türflügel-Ausnehmung erfolgt durch Druck auf die Nocken-Gegenfläche 60 mittels je eines Nockenansatzes 62, welche an den freien Enden der U-Schenkel der in der Draufsicht U-förmigen plattenförmigen Handhabe 36 unmittelbar neben Zapfenansätzen 64 vorgesehen sind, die ihrerseits jeweils in eine im Befestigungsflansch 32 ausgebildete Lageraufnahme 66 eingreifen. Die Nockenansätze 62 greifen durch jeweils ein Fenster 68 im Begrenzungsflansch 32 und liegen auf der Nocken-Gegenfläche 60 des Bügelkörpers 50 auf. In den Figuren 3 und 4 sind zwei verschiedene Schwenkstellungen der Handhabe 36 gezeigt, wobei ersichtlich ist, daß in der in Fig. 3 veranschaulichten Befestigungsstellung, in welcher die Handhabe 36 auf den Begrenzungsflansch herabgeschwenkt ist, der Nockenansatz die Nocken-Gegenfläche 60 in Abwärtsrichtung gedrückt hat, wodurch der Bügelkörper 50 aus dem Ausschnitt 48 heraus gedrängt ist. In der in Fig. 4 veranschaulichten hochgeschwenkten Stellung der Handhabe 36 kann der Bügelkörper 50 dagegen zurück ins Innere des Topfteils schwingen, wodurch die klemmende Anlage an der Wandung der Türflügel-Ausnehmung aufgehoben wird, und der Topfteil aus der Ausnehmung herausgenommen werden kann.

In dem dem montierten Bügelkörper 50 gegenüberliegenden Wandungsbereich des Topfteils 30 ist noch eine niedrige messerartig zugeschärfte in Umfangsrichtung verlaufende Rippe 70 vorgesehen, die sich bei der Montage des Anschlagteils 26 in der Ausnehmung infolge der beim Ausschwenken des Bügelkörpers 50 entstehenden Reaktionskräfte in den stirnkantennahen Wandungsbereich der Ausnehmung eindrückt und den Topfteil somit zusätzlich formschlüssig in der Türflügel-Ausnehmung verriegelt.

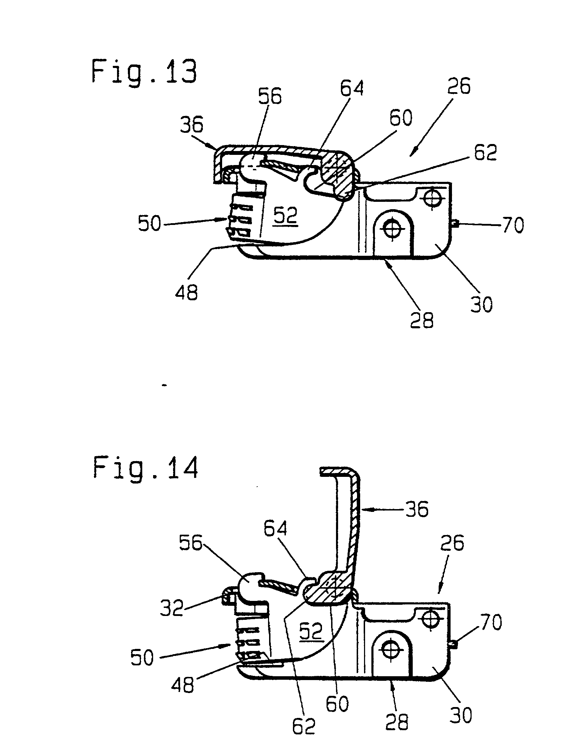

Der in den Figuren 13 und 14 gezeigte Türflügel-Anschlagteil ist gegenüber dem vorstehend beschriebenen Türflügel-Anschlagteil 26 nur bezüglich einer zusätzlichen Koppelung des Bügelkörpers 50 und der Handhabe 36 derart, daß der Bügelkörper 50 beim Hochschwenken der Handhabe 36 zwangsläufig aus der radial ausgeschwenkten Klemmstellung in die zurückgeschwenkte Freigabestellung überführt wird, weitergebildet. Diese Weiterbildung wird nachstehend beschrieben, während bezüglich der übereinstimmenden Ausgestaltung beider Ausführungsbeispiele zur Vermeidung von Wiederholungen auf die vorausgehende Beschreibung des in den Figuren 2 bis 4 beschriebenen Türflügel-Anschlagteils verwiesen werden kann, zumal gleichen Teilen in den Zeichnungsfiguren auch gleiche Bezugszeichen zugeordnet sind.

Die erwähnte zwangsläufige Rückführ-Koppelung zwischen Handhabe 36 und Bügelkörper 50 wird dadurch erreicht, daß die an den Hebelansätzen 52 vorgesehenen Nocken-Gegenflächen 60 an ihrem zum klemmenden Bügelkörper 50 weisenden Ende in einen abgerundet nach oben und dann zurück in Richtung zur Schwenkachse der Handhabe 36 weisenden hakenartigen Ansatz 64 übergehen. Beim Hochschwenken der Handhabe 36 zum Zwecke der Zurückschwenkung des Bügelkörpers 50 aus seiner Klemmstellung in die Freigabestellung greifen dann die Nockenansätze 62 unter die hakenartigen Ansätze 64 und verschwenken so den Bügelkörper 50 zwangsläufig im Gegenuhrzeigersinn, wodurch er aus seiner radial vorstehenden Klemmstellung (Figur 13) in die in die Projektion des Topfteils 30 zurückgezogenen Freigabestellung (Figur 14) zurückgeführt wird.

Es ist ersichtlich, daß im Rahmen des Erfindungsgedankens Abwandlungen und Weiterbildungen der beschriebenen Ausführungsbeispiele verwirklicht sind. So ist das im Zusammenhang mit Türflügel-Anschlagteilen für Möbelscharniere beschriebene Funktionsprinzip der werkzeuglosen Klemmverriegelung auch bei anderen, versenkt in Aussparungen oder Bohrungen in Möbelteilen befestigbaren Möbelbeschlagteilen verwirklichbar, z.B. Befestigungszapfen von Montageplatten oder Verbindungsbeschlägen etc.

Anstelle der zuletzt beschriebenen Zwangsrückführung des Bügelkörpers 50 ist auch denkbar, daß bei dem in Verbindung mit den Figuren 2 bis 4 beschriebenen Türflügel-Anschlagteil zusätzlich eine den Bügelkörper in die Freigabestellung vorspannende Feder vorgesehen wird, welche beim Hochschwenken der Handhabe den Bügelkörper in die Freigabestellung zurückdrängt.

## Patentansprüche

1. Möbelbeschlagteil (26) für die werkzeuglose Montage in einer Ausnehmung in einem plattenförmigen Möbelteil, mit einem gegenüber der Ausnehmung mit Untermaß bemessenen, in die Ausnehmung einsetzbaren Halteteil (30), an dessen oberem freien Rand ein radial vorstehender, in Anlage an die Außenseite des Möbelteils führbarer Flansch (32) vorgesehen ist, und mit einem in montiertem Zustand innerhalb der Ausnehmung liegenden Klemmelement (50), welches durch eine auf dem Flansch angeordnete, von Hand betätigbare Handhabe (36) im wesentlichen radial in klemmende Anlage an die Wandung der Ausnehmung aufspreizbar ist,
**dadurch gekennzeichnet,**
**daß** das Klemmelement als sich über einen Teil der Höhe und einen Teil des Umfangs des Halteteils erstreckender und im Erstreckungsbereich im wesentlichen an die Kontur der Ausnehmung angepaßter Bügelkörper (50) mit beidseitig angesetzten, auf der Außenseite des Halteteils liegenden Hebelansätzen (52) ausgebildet ist, welche um eine gemeinsame Achse verschwenkbar am Flansch (32) oder in Flanschnähe am Halteteil (30) angelenkt sind,
**daß** die Handhabe (36) auf der Oberseite des Flanschs (32) um eine parallel zur Schwenkachse des Bügelkörpers (50) verlaufende Schwenkachse zwischen einer vom Flansch hochgeschwenkten und einer auf dem Flansch aufliegenden Stellung verschwenkbar angelenkt ist, und
**daß** die Handhabe (36) im Bereich ihrer verschwenkbaren Lagerung am Flansch (32) jeweils einen unter den Flansch vortretenden Nockenansatz (62) aufweist, die an jeweils einer an den Bügelkörper-Hebelansätzen (52) vorgesehenen Nocken-Gegenfläche (60) angreifen.

2. Als Türflügel-Anschlagteil für Scharniere bestimmter Möbelbeschlagteil nach Anspruch 1, **dadurch gekennzeichnet, daß** der Halteteil in an sich bekannter Weise als beidseitig seitlich abgeflachter trogartiger Topfteil (30) mit an dessen oberem Rand angesetztem und in der bestimmungsgemäßen Montagelage auf der Rückseite des jeweiligen Türflügels aufliegendem und die Türflügel-Ausnehmung zumindest teilweise abdeckenden einstückig angesetzten Befestigungsflansch (32) ausgebildet ist, daß der metallische Bügelkörper (50) im Bereich der in der bestimmungsgemäßen Montagestellung innerhalb der Türflügel-Ausnehmung der benachbarten Türflügel-Randkante gegenüberliegenden Wandungsbereich des Topfteils (30) vorgesehen ist, und daß die um eine gemeinsame Achse verschwenkbar am Befestigungsflansch (32) oder am Topfteil (30) angelenkten flachen Hebelansätze (52) über die Außenseite der seitlichen Abflachungen des Trogteils (30) geführt sind.

3. Türflügel-Anschlagteil nach Anspruch 2, **dadurch gekennzeichnet, daß** in dem in der bestimmungsgemäßen Montagestellung innerhalb der Türflügel-Ausnehmung der benachbarten Türflügel-Randkante gegenüberliegenden Wandungsbereich des Topfteils (30) ein Ausschnitt (48) vorgesehen ist, in welchem der in seiner Kontur der Wandung der Ausnehmung angepaßte Teil des Bügelkörpers (50) angeordnet ist.

4. Türflügel-Anschlagteil nach Anspruch 2, **dadurch gekennzeichnet, daß** der in seiner Kontur der Wandung der Türflügel-Ausnehmung angepaßte Teil des Bügelkörpers (50) auf der Außenseite der Wandung des Topfteils (30) angeordnet ist.

5. Türflügel-Anschlagteil nach Anspruch 2 oder 3, **dadurch gekennzeichnet, daß** der Bügelkörper (50) in seinem in Klemmanlage an die Wandung der Türflügel-Ausnehmung bringbaren Bereich einen bogenförmigen Abschnitt (51) aufweist, dessen Außenradius im wesentlichen gleich dem Radius der zur Aufnahme des Topfteils (30) bestimmten Türflügel-Ausnehmung entspricht.

6. Türflügel-Anschlagteil nach einem der Ansprüche 2 bis 5, **dadurch gekennzeichnet, daß** der Bügelkörper (50) auf einer Außenseite mit zur Wandung einer zur Aufnahme des Topfteils (30) bestimmten Türflügel-Ausnehmung vortretenden Haltezähnen (54) oder Halterippen versehen ist.

7. Türflügel-Anschlagteil nach einem der Ansprüche 2 bis 6, **dadurch gekennzeichnet, daß** der Bügelkörper (50) ein Stanz-Preßteil aus Metallblech ist.

8. Türflügel-Anschlagteil nach Anspruch 7, **dadurch gekennzeichnet, daß** der Bügelkörper (50) in seinem im Topfteil (30) montierten Zustand federhart ausgebildet ist.

9. Türflügel-Anschlagteil nach einem der Ansprüche 2 bis 8, **dadurch gekennzeichnet, daß** der Topfteil (30) und der Befestigungsflansch (32) ein integraler Stanz-Preßteil aus Metallblech ist.

10. Türflügel-Anschlagteil nach einem der Ansprüche 2 bis 9, **dadurch gekennzeichnet, daß** die Hebelansätze (52) am Bügelkörper (50) jeweils einen einen Schlitz (58) im Befestigungsflansch (32) durchsetzenden und eine Begrenzungskante des jeweiligen Schlitzes (58) umgreifenden Hakenansatz (56) aufweisen.

11. Türflügel-Anschlagteil nach einem der Ansprüche 2 bis 10, **dadurch gekennzeichnet, daß** die Handhabe (36) die Form einer niedrigen U-förmigen Bügelplatte hat, die im Bereich des freien Endes ihrer beiden U-Schenkel jeweils verschwenkbar auf dem Befestigungsflansch (32) gelagert ist.

12. Türflügel-Anschlagteil nach Anspruch 11, **dadurch gekennzeichnet, daß** an den freien Enden der U-Schenkel Zapfenansätze (64) vorgesehen sind, welche jeweils in eine im Befestigungsflansch ausgebildete Lageraufnahme (66) eingreifen.

13. Türflügel-Anschlagteil nach Anspruch 11 oder 12, **dadurch gekennzeichnet, daß** die Handhabe (36) ein integraler Druckgußteil aus Metall ist, an dem die durch jeweils ein Fenster (68) im Befestigungsflansch (32) hindurchgeführten Nockenansätze (62) integral angegossen sind.

14. Türflügel-Anschlagteil nach einem der Ansprüche 2 bis 13, **dadurch gekennzeichnet, daß** von der Außenseite des dem Bügelkörper (50) gegenüberliegenden Wandungsbereichs des Topfteils (30) wenigstens ein zugespitzter oder schneidenartig zugeschärfter Vorsprung (Rippe 70) vortritt.

15. Möbelbeschlagteil nach Anspruch 1, **dadurch gekennzeichnet, daß** an der Handhabe (36) und/oder dem Bügelkörper (50) Rückstellelemente vorgesehen sind, welche den Bügelkörper (50) bei einer Verschwenkung der Handhabe (36) in die hochgeschwenkte Stellung zwangsläufig aus der der klemmenden Anlage an der Wandung einer Ausnehmung zugeordneten Klemmstellung in eine aus der Klemmstellung zurückgezogene Freigabestellung mitnehmen.

## Claims

1. Furniture fitting (26) for installation without tools in a recess in a plate-shaped furniture component including a mounting portion (30), which is undersized with respect to the recess and is insertable into the recess, on the upper free edge of which mounting portion a radially projecting flange (32), which may be guided into engagement with the outer surface of the furniture component, is provided, and including a clamping element (50), which is situated, in the installed state, within the recess and may be expanded substantially radially into clamping engagement against the wall of the recess by a handle (36), which is arranged on the flange and is manually actuable, **characterised in that** the clamping element is constructed in the form of clamp bodies (50), which extend over a proportion of the height and a proportion of the periphery of the mounting portion and are matched substantially to the contour of the recess in the range of their extent with lever projections (52) attached on both sides engaging the outer side of the mounting portion, which lever projections are pivotally connected to the flange (32) about a common axis or to the mounting portion (30) in the vicinity of the flange, that the handle (36) is connected to the upper side of the flange (32) about a pivotal axis extending parallel to the pivotal axis of the clamp body (50) so as to be pivotable between a position swung up from the flange and a position in which it rests on the flange, and that the handle (36) has respective cam formations (52), which project in the region of their pivotal mounting on the flange (32) beneath the flange and engage a respective cam countersurface (60) provided on the clamp body lever projections (52).

2. Furniture fitting intended as a door engagement portion for hinges as claimed in Claim 1, **characterised in that** the mounting portion is constructed in a manner known per se as a trough-like cup portion (30), which is laterally flattened on both sides, with a fastening flange (32), which is integrally attached to its upper edge and, in the predetermined installation position, engages the rear side of the door and at least partially covers the door recess, that the metallic clamp body (50) is provided in the region of the wall region of the cup portion (30) opposed to the adjacent door leaf edge, in the predetermined installation position within the door leaf recess, and that the flat lever projections (52), which are connected to the fastening flange (32) or the cup portion (30) so as to be pivotable about a common axis pass over the outer side of the lateral flat portions of the trough portion (30).

3. Door leaf fitting as claimed in Claim 2, **characterised in that** provided in the wall region of the cup portion (30) opposed to the adjacent door leaf edge, in the predetermined installation position within the door leaf recess, there is a cut-out (48) in which the portion of the clamp body, whose contour is matched to the wall of the recess, is disposed.

4. Door leaf fitting as claimed in Claim 2, **characterised in that** the portion of the clamp body (50), whose contour is matched to the wall of the door leaf recess, is disposed on the outer side of the wall of the cup portion (30).

5. Door leaf fitting as claimed in Claim 2 or 3, **characterised in that** in its region movable into clamping engagement with the wall of the door leaf recess the clamp body (50) has an arcuate section (51), whose external radius is substantially equal to the radius of the door leaf recess intended to receive the cup portion (30).

6. Door leaf fitting as claimed in one of Claims 2 to 5, **characterised in that** the clamp body (50) is provided on an outer side with retaining teeth (54) or retaining ribs projecting towards the wall of a door leaf recess intended to receive the cup portion (30).

7. Door leaf fitting as claimed in one of Claims 2 to 6, **characterised in that** the clamp body (50) is a stamping from metal plate.

8. Door leaf fitting as claimed in Claim 7, **characterised in that** the clamp body (50) is spring hard in its condition installed in the cup portion (30).

9. Door leaf fitting as claimed in one of Claims 2 to 8, **characterised in that** the cup portion (30) and the fastening flange (32) are an integral stamping from metal plate.

10. Door leaf fitting as claimed in one of Claims 2 to 9, **characterised in that** the lever projections (52) on the clamp body (50) have a respective hook projection (56) which passes through a slot (58) in the fastening flange (32) and engages around a boundary edge of the respective slot (58).

11. Door leaf fitting as claimed in one of Claims 2 to 10, **characterised in that** the handle (36) has the shape of a low U-shaped handle plate, which is pivotally mounted on the fastening flange (32) in the region of the free ends of both its U limbs.

12. Door leaf fitting as claimed in Claim 11, **characterised in that** provided at the free ends of the U limbs there are pivot projections (64), which engage in respective bearing mounts (66) formed in the fastening flange.

13. Door leaf fitting as claimed in Claim 11 or 12, **characterised in that** the handle (36) is an integral metallic die-casting, integrally cast onto which are the cam projections (62) passing through respective windows (68) in the fastening flange (32).

14. Door leaf fitting as claimed in one of Claims 2 to 13, **characterised in that** projecting from the outer side of the wall region of the cup portion (30) opposed to the clamp body (50) there is at least one projection (70) which is pointed or sharpened in the manner of a blade.

15. Furniture fitting as claimed in Claim 1, **characterised in that** provided on the handle (36) and/or the clamp body (50) there are restoring elements which, when the handle (36) is pivoted into the swung-up position, oblige the clamp body (50) to move with them out of the clamped position associated with the clamping engagement with the wall of a recess into a released position retracted from the clamped position.

## Revendications

1. Ferrure de meuble (26) se montant sans outil dans un évidement d'un élément de meuble en forme de plaque, comportant une pièce de maintien (30) sous-dimensionnée par rapport à l'évidement, pouvant être placée dans celui-ci et sur le bord libre supérieur de laquelle est prévue une bride (32) saillant radialement et pouvant être mise en appui contre la face extérieure de l'élément de meuble, et un élément de blocage (50) qui, à l'état monté, se trouve à l'intérieur de l'évidement, et peut être écarté sensiblement radialement en appui de blocage contre la paroi de l'évidement par une poignée (36) montée sur la bride et manoeuvrable manuellement,
**caractérisée par le fait**
**que** l'élément de blocage est constitué d'un corps étrier (50) s'étendant sur une partie de la hauteur et une partie du pourtour de la pièce de maintien, adaptée sensiblement, dans la zone de son étendue, au contour de l'évidement et ayant des appendices leviers (52) situés des deux côtés sur le côté extérieur de la pièce de maintien et articulés à la bride (32) ou à proximité de celle-ci à la pièce de maintien (30) de façon à pouvoir pivoter autour d'un axe commun,
**que** la poignée (36) est articulée sur le côté supérieur de la bride (32) de façon à pouvoir pivoter autour d'un axe de pivotement parallèle à l'axe de pivotement du corps étrier (50) entre une position relevée de la bride et une position reposant sur la bride, et
**que** la poignée (36) présente dans la zone de chaque appui pivotant sur la bride (32) un appendice came (62) qui fait saillie sous la bride et attaque une contre-surface came (60) prévue sur les appendices leviers (52) du corps étrier.

2. Ferrure de meuble servant d'applique de vantail de porte pour charnières selon la revendication 1, **caractérisée par le fait que** la pièce de maintien est constituée de façon connue d'une pièce pot du genre auge (30) aplatie latéralement des deux côtés et présentant une bride de fixation (32) faite sur son bord supérieur et, dans la position de montage prévue, reposant sur la face arrière du vantail de porte et couvrant au moins en partie l'évidement du vantail de porte, que le corps étrier métallique (50) est prévu dans la zone de la partie de paroi de la pièce pot (30) qui, dans la position de montage prévue dans l'évidement du vantail de porte, est opposée au côté de bord voisin du vantail de porte, et que les appendices leviers plats (52) articulés à la bride de fixation (32) ou à la pièce pot (30) de façon à pouvoir pivoter autour d'un axe commun sont guidés sur le côté extérieur des plats latéraux de la pièce auge (30).

3. Applique de vantail de porte selon la revendication 2, **caractérisée par le fait que** dans la partie de paroi de la pièce pot (30) opposée, dans la position de montage prévue dans l'évidement du vantail de porte, au côté de bord voisin du vantail de porte est prévue une échancrure (48) dans laquelle est placée la partie du corps étrier (50) dont le contour est adapté à la paroi de l'évidement.

4. Applique de vantail de porte selon la revendication 2, **caractérisée par le fait que** la partie du corps étrier (50) dont le contour est adapté à la paroi de l'évidement du vantail de porte est placée sur le côté extérieur de la paroi de la partie pot (30).

5. Applique de vantail de porte sur l'une des revendications 2 et 3, **caractérisée par le fait que** le corps étrier (50) présente dans sa zone pouvant être mise en appui de blocage contre la paroi de l'évidement du vantail de porte une partie arquée (51) dont le rayon extérieur est sensiblement égal au rayon de l'évidement du vantail de porte destiné à recevoir la pièce pot (30).

6. Applique de vantail de porte selon l'une des revendications 2 à 5, **caractérisée par le fait que** le corps étrier (50) est pourvu sur un côté extérieur de dents de maintien (54) ou de nervures de maintien saillant vers la paroi d'un évidement de vantail de porte destiné à recevoir la pièce pot (30).

7. Applique de vantail de porte selon l'une des revendications 2 à 6, **caractérisée par le fait que** le corps étrier (50) est une pièce estampée en tôle métallique.

8. Applique de vantail de porte selon la revendication 7, **caractérisée par le fait que** dans son état monté dans la pièce pot (30), le corps étrier (50) est écroui.

9. Applique de vantail de porte selon l'une des revendications 2 à 8, **caractérisée par le fait que** la pièce pot (30) et la bride de fixation (32) sont formées d'une seule pièce estampée en tôle métallique.

10. Applique de vantail de porte selon l'une des revendications 2 à 9, **caractérisée par le fait que** les appendices leviers (52) situés sur le corps étrier (50) présentent chacun un appendice crochet (56) qui passe par une fente (58) faite dans la bride de fixation (32) et embrasse un côté limite de la fente (58) correspondante.

11. Applique de vantail de porte selon l'une des revendications 2 à 10, **caractérisée par le fait que** la poignée (36) a la forme d'une plaque étrier basse en forme de U qui est montée dans la zone de l'extrémité libre de ses deux branches de U sur la bride de fixation (32) de façon à pouvoir pivoter.

12. Applique de vantail de porte selon la revendication 11, **caractérisée par le fait qu'**aux extrémités libres des branches de U sont prévus des appendices tourillons (64) qui s'engagent chacun dans un palier (66) formé dans la bride de fixation.

13. Applique de vantail de porte selon l'une des revendications 11 et 12, **caractérisée par le fait que** la poignée (36) est une pièce coulée sous pression en métal sur laquelle sont venus de coulée les appendices cames (62), qui passent chacun par une fenêtre (68) faite dans la bride de fixation (32).

14. Applique de vantail de porte selon l'une des revendications 2 à 13, **caractérisée par le fait que** du côté extérieur de la partie de paroi de la pièce pot (30) opposée au corps étrier (30) fait saillie au moins une saillie pointue ou affûtée à la manière d'un tranchant (nervure 70).

15. Ferrure de meuble selon la revendication 1, **caractérisée par le fait que** sur la poignée (36) et/ou le corps étrier (50) sont prévus des éléments de rappel qui, lors d'un pivotement de la poignée (36) l'amenant en position relevée, entraînent de force le corps étrier (50) de la position de blocage correspondant à l'appui de blocage contre la paroi d'un évidement à une position de déblocage reculée de la position de blocage.
